# FASCICULE DE BREVET EUROPEEN

(11) **EP 1 227 033 B1**
(45) Date de publication et mention de la délivrance du brevet: **13.07.2005**
(21) Numéro de dépôt: 02360002.6
(22) Date de dépôt: 07.01.2002
(51) Int. Cl.: B62K 13/02, B62K 27/12, B62K 21/02

(54) **Dispositif de transformation de bicyclettes en tandem**
Einrichtung zum Verwandeln von Einzelfahrrädern in ein Tandemfahrrad
Apparatus for converting single bicycles into a tandem

(30) Priorité: 25.01.2001 FR 0100975
(43) Date de publication de la demande: 31.07.2002
(73) Titulaire: Sonnefraud, Jean-Claude, 67118 Geispolsheim (FR); Sonnefraud, Gilberte, 67118 Geispolsheim (FR)
(72) Inventeur: Sonnefraud, Gilberte, 67118 Geispolsheim (FR)

(56) Documents cités:
- GB-A- 2 287 437
- US-A- 4 458 908
- US-A- 4 511 155
- US-A- 5 372 371
- US-A- 5 522 610

## Description

La présente invention a trait au domaine du cyclisme et notamment aux dispositifs qui, intégrés à l'équipement de base d'une bicyclette, permettent de l'atteler à une autre bicyclette afin que l'ensemble constitue un tandem à trois roues.

Un tandem traditionnel est une bicyclette actionnée par deux personnes placées l'une derrière l'autre. Il est guidé par la personne placée en tête mais les partenaires fournissent conjointement l'énergie motrice par le mouvement synchronisé du pédalier.

D'un point de vue purement sportif, l'intérêt du tandem réside dans le rendement global élevé obtenu avec la machine actionnée par un couple de personnes, permettant une vitesse de locomotion supérieure à celle atteinte avec l'énergie d'une personne seule.

Force est de constater que l'évolution des moeurs réoriente l'usage du tandem vers le cyclotourisme à caractère non compétitif, d'avantage tourné vers les loisirs et l'hygiène de vie. Ainsi, les nouveaux critères retenus par le public sont la liberté individuelle des mouvements des partenaires, le confort et la sécurité sur route mais aussi sur les chemins non asphaltés, voire en utilisation tout terrain. Le confort du tandem et son adéquation à la morphologie et aux capacités physiques de chacun sont déterminants. D'autre part, le coût du tandem doit rester abordable. Enfin, sa facilité de transport est un critère de choix.

L'invention résulte de la constatation qu'un tandem traditionnel ne répond que partiellement à ces critères cumulés. En effet, la motricité conjuguée et synchronisée des partenaires interdit tout repos de l'un d'eux pendant l'effort de l'autre. Ce point est particulièrement sensible lorsque les capacités physiques (gabarit, endurance, handicap) sont inégales entre les deux partenaires.

D'autre part, la sécurité et la solidité intrinsèque du tandem traditionnel sont obtenues par des solutions techniques qui se traduisent par un coût élevé de la machine (surdimensionnement des éléments, fabrications spéciales). Le renforcement mécanique du tandem traditionnel pour l'adapter à un usage sur chemins non asphaltés voire en tout terrain, accroît encore son coût. L'accès au confort apporté par les technologies de transmission, de freinage et de suspension de tout genre déployées sur les bicyclettes de type VTC (Vélo Tout Chemin) ou VTT (Vélo Tout Terrain), est de ce fait hors de prix.

Enfin, le manque de maniabilité dynamique sur chemins non asphaltés ou lors de son transport est un frein au développement de l'activité du cyclotourisme en tandem traditionnel.

L'art antérieur propose plusieurs alternatives au tandem traditionnel, sous la forme de dispositifs d'attelage qui permettent d'associer une bicyclette à un mono-cycle dédié ou à une seconde bicyclette dont la roue avant a préalablement été retirée, l'ensemble constituant dans chaque cas un véhicule à trois roues. Parmi ces dispositifs d'attelage, citons :
1/ Ceux dont le point d'ancrage de la remorque sur la bicyclette de tête est relativement éloigné de l'axe de la roue centrale du véhicule ainsi constitué: Les dispositifs d'attelage décrits dans les brevets FR2763307 et FR2763308 illustrent ce cas de figure.
   De par la position généralement élevée du point d'ancrage sur la bicyclette de tête (sur la tige de selle par exemple), le véhicule à trois roues ainsi constitué ne se prête guère à un usage sur chemin non asphaltés et moins encore à un usage en tout terrain. En effet, le couple moteur exercé par le partenaire de tête sur la roue centrale ajouté à celui résultant du produit de la force antagoniste de la bicyclette tractée par la longueur équivalente du bras de levier mesurée du point d'ancrage à l'axe de la roue centrale, font que la perte d'adhérence consécutive au lever de la roue avant du véhicule, constitue une entrave majeure à la sécurité dudit véhicule dont le partenaire de tête ne contrôle plus la trajectoire.
2/ Ceux dont le point d'ancrage de la remorque sur la bicyclette de tête est proche de l'axe de la roue centrale du véhicule à trois roues : Le dispositif d'attelage décrit dans le brevet WO9509761 illustre ce cas de figure.
   Ces dispositifs additionnels équipent le cadre de la bicyclette de tête et permettent le raccordement de la bicyclette tractée sans modification de la fourche de celle-ci. Malgré la relative simplicité de mise en oeuvre de tels dispositifs, ceux-ci se heurtent à la multiplicité des formes et des dimensions des cadres sur lesquels lesdits dispositifs doivent être installés, ce qui en multiplie les variantes de réalisation, diminue la rigidité de l'assemblage et en grève le coût.
   D'autre part, l'écartement de la fourche avant de la bicyclette tractée doit être suffisant pour contenir l'encombrement des équipements de la roue arrière de la bicyclette de tête. Généralement, la fourche avant d'une bicyclette est d'un écartement moindre que celle qui supporte la roue arrière. La présence des éléments mécaniques indispensables à la motricité du véhicule (pignons multiples de transmission, freins à disque) obligent de ce fait à éloigner l'axe du pivot d'attache de l'axe de la roue centrale du véhicule pour tenir compte de l'encombrement de ceux-ci. Le couple de rotation autour de l'axe provoqué par la position excentrée de l'attelage engendre la même difficulté de conduite du véhicule précédemment évoquée consécutive à la perte d'adhérence de la roue directrice de celui-ci. Dans le brevet USA-4458908, l'auteur contourne le problème d'écartement précédemment cité en faisant usage d'une fourche avant dont la largeur est juste adaptée à celle du moyeu de la roue arrière de la bicyclette d'accueil, l'extrémité des bras de la fourche étant pourvue de pivots (78) déportés par rapport à l'axe de la roue centrale du tandem. Rouler en bicyclette individuelle devient possible par mise en place d'adaptateurs non détaillés mais permettant de supporter la roue avant d'origine dont le moyeu est généralement moins large. Le porte à faux engendré par les multiples adaptateurs (80) et pivots excentrés (78) comparé la simplicité des solutions représentées permet de douter de la robustesse de l'attelage qui, en tout étant de cause, ne saurait être facilement monté ou démonté au gré d'un utilisateur non initié au métier de la mécanique. En fait, l'auteur revendique principalement un dispositif inclus dans la tête de fourche de la bicyclette attelée, ce dispositif permettant à celle-ci de se pencher de manière contrôlée par rapport à la bicyclette de la section avant pour une meilleure stabilité de la conduite du tandem dans les virages. Il convient de remarquer que l'auteur souligne déjà les multiples avantages du tandem à trois roues colinéaires par rapport au tandem traditionnel: Prix de revient plus bas, stockage facile, possibilité de prendre des virages plus serrés et propulsion indépendante.
3/ Ceux dont le point d'ancrage de la remorque sur la bicyclette de tête se trouve sur l'axe de la roue centrale du véhicule à trois roues : Le dispositif d'attelage décrit dans le brevet USA-5372371 illustre ce cas de figure. L'auteur fait ici appel à une fourche avant spécifique dont l'écartement des bras est encore plus important que celui évoqué dans les brevets ci-dessus analysés. L'articulation centrale du tandem est obtenue par un jeu de roulements logées à l'extrémité de chaque bras de la fourche, ces roulements collaborant avec des prolongateurs vissés sur l'axe du moyeu de la roue centrale du tandem. L'auteur évoque comme principal avantage la simplicité et la solidité de la solution présentée. D'autre part, le raccordement des bicyclettes individuelles en tandem ou leur dissociation pour une utilisation individuelle ne nécessite qu'une intervention mécanique légère. Malgré cette recherche manifeste de simplicité, l'outillage (certainement spécifique) demeure nécessaire et l'importante largeur de la fourche constitue un handicap esthétique majeur et parfois même fonctionnel, en particulier lorsque la bicyclette est utilisée de façon autonome. Il convient également de préciser que le dispositif évoqué faisant appel à des prolongateurs vissés sur les axes des moyeux de roues ne fonctionne pas en présence d'attaches rapides de roues couramment employées dans le monde de la bicyclette.

Enfin, quels que soient les dispositifs d'attelage de l'art antérieur, l'utilisation du frein de jante disponible sur la roue avant de la bicyclette tractée n'est généralement pas envisageable sur ce type de véhicule. D'autre part, l'esthétique du véhicule à trois roues ou celle des bicyclettes individuelles qui le composent est modifiée par la présence des dispositifs d'attelage additionnels.

Pour résoudre les problèmes liés à l'usage grand public d'un tandem traditionnel à savoir, manque de liberté des mouvements et de confort individuel des cyclistes, maniabilité restreinte et solidité (à coût abordable) non adaptée à une utilisation hors piste asphaltée, sans y adjoindre ceux introduits par les solutions alternatives à base de dispositifs de remorquage tels l'insécurité dynamique par perte du contrôle de trajectoire ou la fragilité et le manque de standardisation et d'esthétique de l'attelage, l'invention fait appel à des moyens qui, intégrés à l'équipement de base d'une bicyclette, permettent son raccordement à une autre bicyclette de sorte à constituer, de façon facilement réversible, un tandem à trois roues colinéaires ne présentant pas les inconvénients précités.

Ainsi, à partir d'une bicyclette traditionnelle et plus particulièrement de type VTC ou VTT issue de grande diffusion (coût optimisé), parfaitement adaptée aux exigences de confort, de sécurité et de morphologie du cycliste (dimensions et forme du cadre, rapports de transmission, qualité des freins, cadre et/ou fourche suspendus ou non), l'invention met en oeuvre des moyens qui permettent d'obtenir une bicyclette raccordable à toute autre bicyclette traditionnelle de sorte à former un tandem à trois roues avec lequel les partenaires peuvent évoluer à leur rythme, en toute liberté gestuelle (la motricité est individuelle sur les roues centrale et arrière) tout en conservant la possibilité de retrouver la configuration individuelle de leurs bicyclettes respectives par action manuelle simple et ne nécessitant aucun outil spécifique sur les moyens qui permettent l'attelage. La maniabilité du tandem et son encombrement lors du transport correspondent à ceux du couple de bicyclettes qui le constituent. Enfin, les moyens d'attelage intégrés à l'équipement de base de la bicyclette qui en est dotée s'harmonisent avec l'esthétique de celle-ci.

L'invention concerne de façon générale une fourche de support de la roue avant d'une bicyclette qui est caractérisée en ce que les parties supérieures de ses bras rigides comportent chacune une paire d'articulations avec deux tés formant un châssis solidaire du tube de fourche et dont l'un au moins comporte un dispositif de réglage symétrique afin que cette fourche puisse, avec un premier écartement, supporter la roue avant et, avec un second écartement, supérieur au premier, coopérer avec les extrémités de l'axe d'une roue arrière d'une autre bicyclette.

La différence entre les deux écartements des extrémités des bras est, par exemple, de l'ordre de 4 cm.

Dans une réalisation, chaque bras est pivotant autour de l'un de ses points, les moyens de réglage de l'écartement entre les extrémités des bras comportant des moyens pour régler l'écartement angulaire entre les deux bras pivotants.

Dans ce cas, la fourche peut comprendre une barre transversale parallèle à l'axe de la roue et à laquelle sont fixés les pivots des bras.

La fourche peut aussi comporter deux biellettes, la première étant articulée au premier bras et la seconde au second bras, ces articulations étant distinctes des pivots des bras, les extrémités de ces biellettes qui sont opposées aux bras étant solidaires d'un organe déplaçable pour permettre la variation de l'angle entre les biellettes et donc le pivotement des bras autour des pivots.

Selon un mode de réalisation, l'organe pour permettre la variation de l'angle entre les biellettes comporte un châssis fixé à la barre de laquelle sont solidaires les pivots des bras.

L'organe déplaçable pour faire varier l'angle entre les biellettes est, par exemple, commandable par un dispositif à vis dont la tête est de préférence disposée à la partie supérieure de la fourche.

De préférence, l'extrémité de chaque bras comporte un trou dont la périphérie est fermée, ce trou étant destiné à recevoir un accessoire d'adaptation aux extrémités de l'axe de la roue avant ou aux extrémités de l'axe de la roue arrière d'une autre bicyclette.

La face intérieure de chaque extrémité de bras présente avantageusement une surface courbe, par exemple sphérique, de façon à permettre un contact avec une pièce correspondante pour les divers écartements angulaires entre les bras.

L'invention concerne aussi un accessoire d'adaptation de la fourche selon l'invention à l'axe de la roue avant de la bicyclette ou à l'axe de la roue arrière d'une autre bicyclette comprenant deux douilles emboîtables sur les extrémités respectives de la roue avant de la bicyclette ou de la roue arrière d'une autre bicyclette, chaque douille présentant une surface sphérique pouvant pivoter avec un débattement angulaire à l'intérieur d'un trou formant palier à l'extrémité du bras correspondant de la fourche.

Dans une réalisation, un frein est solidaire de la fourche, ce frein étant tel qu'il puisse coopérer tant avec la roue avant de la bicyclette qu'avec la roue arrière d'une autre bicyclette quand la roue avant est démontée.

L'invention se rapporte également à une bicyclette comprenant une fourche selon l'invention, ainsi qu'à un appareil de locomotion du type tandem à trois roues, comprenant une bicyclette avant et une bicyclette arrière, dont la bicyclette arrière comporte une fourche selon l'invention, la roue avant de cette bicyclette arrière étant démontée et la fourche de sa roue avant étant fixée et articulée aux extrémités de l'axe de la roue arrière de la bicyclette avant.

Les caractéristiques et avantages de l'invention apparaissent avec la description des représentations schématiques du tandem à trois roues ainsi que de ses parties caractérisantes dont un mode de réalisation est représenté, celle-ci étant effectuée en se référant aux dessins ci-annexés sur lesquels :
La figure 1 représente schématiquement un tandem à trois roues obtenu à partir de deux bicyclettes (1) et (2) de caractéristiques identiques, alors que la figure 2 associe deux bicyclettes de caractéristiques différentes, la bicyclette (1) étant dotée dans chaque cas des moyens d'attelage objet de l'invention.
La figure 3 donne une représentation schématique de la fourche (4) dotée de ses moyens de raccordement (3) et du moyen (5) de modification de sa géométrie mis en oeuvre par l'invention.
Les figures 4 et 5 représentent à titre d'exemple non limitatif deux modes de réalisation des moyens de raccordement (3) ainsi qu'un mode de réalisation du moyen (5) de modification de la géométrie de la fourche (4).

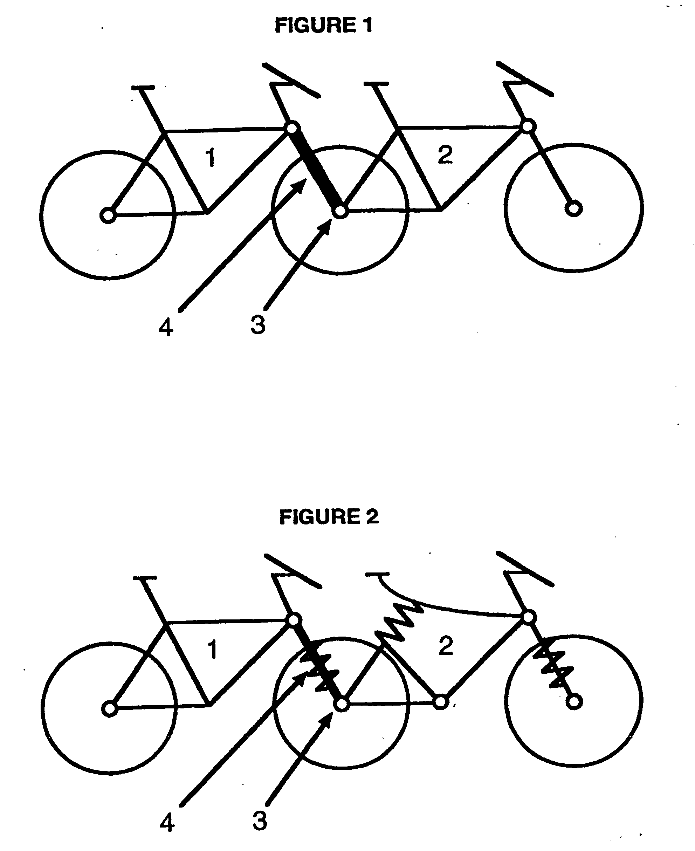

Sur la figure 1 est représenté de manière schématique un tandem à trois roues constitué d'une bicyclette (2) associée à une bicyclette (1) dont la roue avant a préalablement été retirée et dont les embouts de la fourche (4) sont raccordées grâce aux moyens (3) sur les extrémités de l'axe de la roue arrière de la bicyclette (2).

L'articulation permettant au tandem de virer dans la direction prise par la bicyclette (2) est réalisée par le pivot de la fourche (4) de la bicyclette (1) dont la douille et le jeu de roulements de la colonne de direction sont des éléments standardisés de raccordement du tube de la fourche (4) au cadre de la bicyclette (1), les dimensions du tube de la fourche (4) étant elles-mêmes standardisées.

L'articulation permettant au tandem à trois roues d'épouser le relief accidenté d'une piste est réalisée par le pivot formé par les moyens de raccordement (3) autour de l'axe horizontal de la roue arrière de la bicyclette (2), ledit axe étant l'élément standardisé de raccordement de la bicyclette (1) sur la bicyclette (2). La position privilégiée du point d'attelage sur l'axe de la roue arrière de la bicyclette (2) supprime tout effort antagoniste exercé par la bicyclette (1) sur le cadre de la bicyclette (2), n'interférant pas de ce fait sur le contrôle de la trajectoire de celle-ci et garantissant par la même la sécurité des cyclistes, en particulier lors de la conduite hors chemins asphaltés.

Le raccordement des bicyclettes (1) et (2) s'effectue par les embouts à rotule (22) de la fourche (4) sur chacune des extrémités de l'axe de la roue arrière de la bicyclette (2) grâce aux moyens de raccordement (3) adaptés aux différents types de fixations de la roue arrière sur le cadre de la bicyclette (2), le dispositif étant préalablement retiré lorsqu'il s'agit du système d'attache rapide par came. Le choix de ce double point de liaison permet d'obtenir une structure stable et rigide du tandem ainsi qu'un parfait alignement dans le plan vertical des cadres des bicyclettes qui le composent. La sécurité dynamique en est améliorée, en particulier lorsque la charge du tandem est importante. D'autre part, l'accouplement des bicyclettes (1) et (2) est indépendant de l'encombrement et du nombre des équipements présents sur la roue arrière de la bicyclette (2). En effet, le raccordement par les extrémités de l'axe offre toute liberté quant aux dimensions et à la forme des équipements qui se situent entre ces points de raccordement.

La fourche (4) de la bicyclette (1) comporte un moyen (5) de modification de sa géométrie permettant le raccordement facile et réversible par l'usager entre les deux bicyclettes qui constituent le tandem à trois roues. Une manoeuvre simple et ne nécessitant aucun outil spécifique sur un moyen de réglage intégré à l'un ou l'autre des tés de la fourche (4) ou conjointement à ces deux tés, permet d'emboîter, de resserrer et de bloquer par pincement les embouts à rotule de ladite fourche par les moyens de raccordement (3) sur l'axe de la roue arrière de la bicyclette (2).

Lorsque le moyeu de la roue arrière de la bicyclette (2) est prévu pour être équipé d'un dispositif de fixation rapide à came préalablement retiré, l'effort de serrage est transmis par les moyens de raccordement (3) aux pattes du cadre et au moyeu de ladite roue, assurant par la même la fixation de celle-ci en remplacement de la fonction initialement réalisée par le dispositif de fixation rapide à came.

Les principes ci-dessus évoqués concernent le raccordement de la fourche (4) sur l'axe de la roue arrière de la bicyclette (2) mais s'appliquent également dans les mêmes conditions entre ladite fourche et la roue avant retirée de la bicyclette (1) lorsque celle-ci est destinée à être utilisée de manière autonome.

A diamètres identiques entre la roue avant retirée de la bicyclette (1) et la roue arrière de la bicyclette (2), l'invention permet, de par la position relative inchangée du frein de jante (6) par rapport à la jante de l'une ou de l'autre des roues, d'utiliser ledit frein de jante pour agir sur la roue centrale du tandem ce qui, d'une part, accroît la sécurité dynamique de celui-ci dès lors pourvu de quatre dispositifs de freinage indépendants et d'autre part, diminue les efforts de retenue de la bicyclette (1) qui ne transitent plus, ni dans le cadre, ni dans les freins de la bicyclette (2).

Sur la figure 2 est représenté de manière schématique un tandem à trois roues mettant en oeuvre la fourche (4) et les moyens de raccordement (3) dans des conditions comparables à celles représentées sur la figure 1. Il est démontré ici que les principes qui définissent la fourche (4) et les moyens de raccordement (3) les rendent indépendant des caractéristiques de forme et de dimension des bicyclettes destinées à être couplées pour former le tandem à trois roues.

En effet, les seuls points de liaison de la fourche (4) et des moyens de raccordement (3) avec les bicyclettes sont des éléments standardisés à savoir, l'axe et les pattes de fixation de la roue sur la bicyclette (2) ainsi que la colonne de direction de la bicyclette (1). La mise en place de la fourche (4) et de sa paire de moyens de raccordement (3) sur une bicyclette traditionnelle est ainsi facilitée, que ce soit pour le public auquel la fourche (4) et ses moyens de raccordement (3) sont proposés sous la forme d'un kit de transformation d'une bicyclette traditionnelle, ou directement à la fabrication de ladite bicyclette dont l'option d'usine, qui permet son raccordement à toute autre bicyclette pour former un tandem à trois roues, est un argument commercial fort.

La fourche (4) remplace la fourche traditionnelle de la bicyclette (1). Outre la fonction initiale de pivot dans la colonne de direction, la fourche (4) permet le raccordement rapide de la bicyclette (1) à une bicyclette traditionnelle (2) sans faire appel à un outil spécifique, par simple variation de l'écartement des bras. La manoeuvre s'effectue de la manière suivante :
- Partant de la situation où la bicyclette (1) munie de la fourche (4) est autonome et dispose de sa propre roue avant dont chaque extrémité de l'axe est équipé d'un moyen de raccordement (3), l'action sur le moyen (5) de modification de la géométrie de la fourche (4) permet d'en écarter les bras et de libérer ainsi ladite roue.
- L'ajustage de l'écartement de la fourche (4) se poursuit de sorte à ce que les moyens de raccordement (3) embrassent les extrémités de l'axe de la roue arrière de la bicyclette (2) en remplacement du dispositif de fixation rapide de sa roue si celle-ci en est équipée.
- Le raccordement se termine par resserrement de l'écartement des bras de la fourche (4) permettant d'obtenir d'une part, un blocage en translation desdits bras sur l'axe de la roue arrière de la bicyclette (2) et d'autre part, l'éventuelle fixation de ladite roue grâce à la pression exercée par le serrage sur les pattes du cadre et sur son moyeu lorsque ladite roue est conçue pour être fixée par un dispositif d'attache rapide à came préalablement retiré.

Le retour tout aussi facile à une configuration individuelle des bicyclettes s'effectue dans l'ordre inverse des opérations.

Les moyens mis en oeuvre par l'invention sur une bicyclette pour lui permettre d'être raccordée à une autre bicyclette traditionnelle de sorte à constituer un tandem à trois roues, sont parfaitement intégrés à l'essieu et à la fourche de la roue avant de la bicyclette ainsi équipée. De ce fait, l'esthétique du tandem et celle des bicyclettes individuelles qui le composent sont largement préservées.

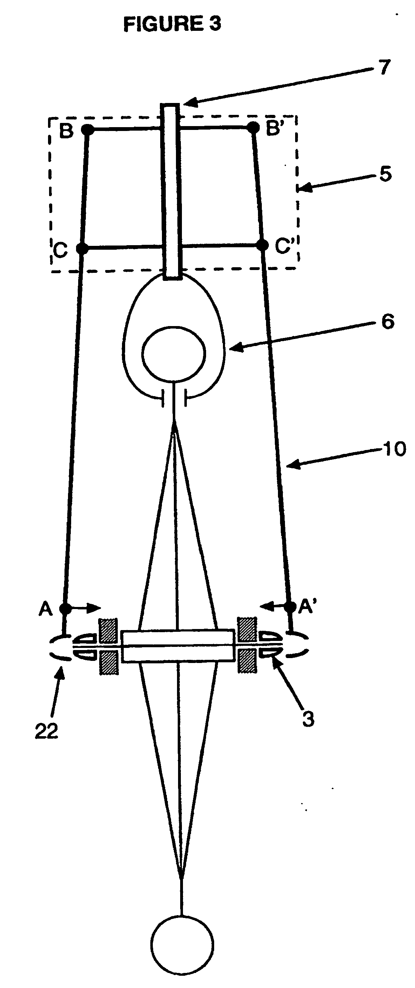

La figure 3 donne une représentation schématique de la fourche (4) associée aux moyens (3) mis en oeuvre par l'invention. La description des principes retenus fait appel aux éléments suivants :
La fourche (4) est constituée de deux bras (A-B) et (A'-B') dont les extrémités (A) et (A') sont munies chacune d'un embout (22) comportant un logement sphérique en contact avec les moyens de raccordement (3) venant s'emboîter sur les extrémités de l'axe de la roue arrière de la bicyclette (2). Le moyen (5) de modification de la géométrie de la fourche est schématisé par le trapèze déformable dont les branches (B-C) et (B'-C') représentent les bras de la fourche (4) et les branches (B-B') et (C-C') représentent les tés de fixation desdits bras sur le tube (7) de la fourche. La modification de l'écartement (A-A') des bras est obtenue indifféremment par l'effet de levier autour des points (C) et (C'), la distance (B-B') étant réglable, ou par pivotement des bras autour des points (B) et (B'), la distance (C-C') étant réglable, ou encore par association des deux principes de réglage précédemment évoqués si un déplacement parallèle des bras est recherché. L'amplitude de la variation obtenue entre les embouts (22) de la fourche (4) est compatible avec la possibilité de raccorder ladite fourche sur les extrémités de l'axe de la roue arrière de la bicyclette (2) mais aussi sur les extrémités de l'axe généralement plus court de la roue avant retirée de la bicyclette (1), la différence de longueur entre ces axes étant de l'ordre de 4cm. Lors du raccordement de la fourche (4) à la roue, l'articulation sphérique réalisée entre les embouts (22) et les moyens de raccordement (3) autorise un débattement angulaire de l'axe des bras par rapport à celui de la roue à laquelle la fourche est raccordée.
La paire de moyens de raccordement (3) transmet l'effort de pincement de la fourche (4) aux pattes du cadre et au moyeu de la roue arrière de la bicyclette (2). Outre la fonction de fixation du moyeu de la roue sur les pattes du cadre de la bicyclette (2) ainsi obtenue lorsque ledit moyeu est prévu pour être fixé par une attache rapide à came, les moyens de raccordement (3) permettent l'articulation du tandem autour de l'axe de sa roue centrale et constituent les points de raccordement rapide de la bicyclette (1) par emboîtement de la fourche (4) sur l'axe de la roue arrière de la bicyclette (2).

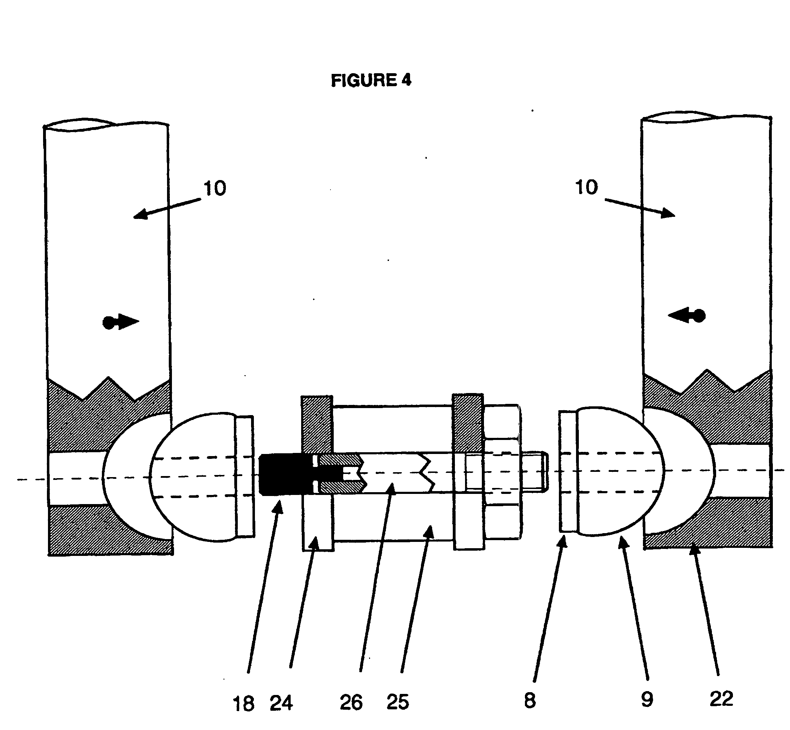

La description détaillée qui suit donne à titre d'exemple non limitatif et en regard de la figure 4, un mode de réalisation du moyen de raccordement (3) selon les deux variantes adaptées d'une part, à un moyeu fixé classiquement par une paire d'écrous et d'autre part, à un moyeu prévu pour être fixé par une attache rapide à came.

Le moyen de raccordement (3) est glissé sur chaque extrémité de l'axe (26) d'un moyeu de roue (25) à fixation classique par écrous (voir la partie droite de la figure) jusqu'à arriver en butée sur son épaulement (8). Le moyen de raccordement (3) est constitué d'une douille dont la forme sphérique de la surface extérieure s'emboîte et s'articule dans le logement correspondant de l'embout (22) du bras de la fourche, la partie sphérique (9) constituant un pivot pour l'embout (22) avec l'axe (26) de la roue.

Le moyen de raccordement (3) pour un moyeu de roue (25) à attache rapide (voir la partie gauche de la figure) est constitué par la douille précédemment décrite à laquelle est associé un centreur (18) assurant la coaxialité de ladite douille avec l'axe (26) qui ne dépasse pas les pattes (24) du cadre de la bicyclette (2) et dont le corps creux est pénétré par la pige du centreur. L'épaulement (8) de la douille transmet la pression de serrage de la fourche vers la patte du cadre (24) et vers le moyeu (25) de la roue, assurant ainsi l'attache rapide de celle-ci sur la bicyclette (2).

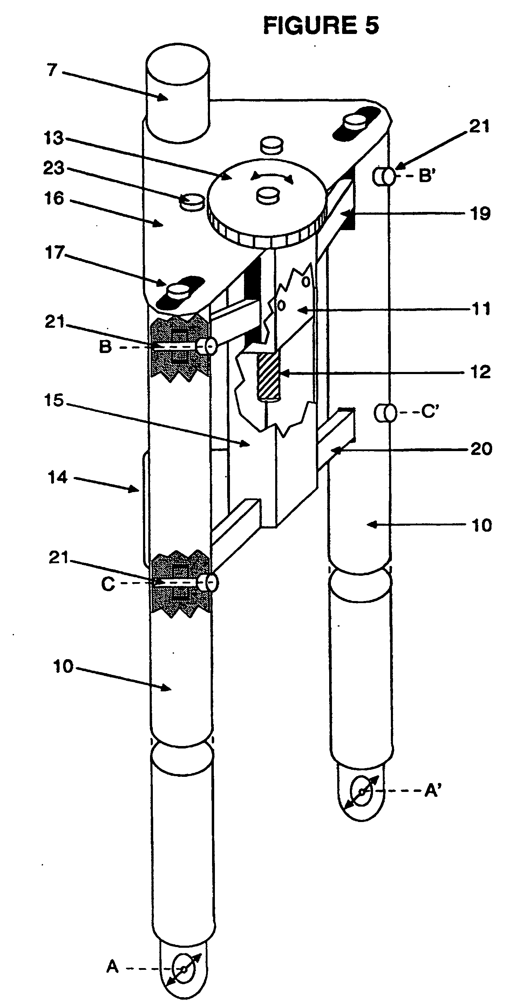

La description détaillée qui suit donne à titre d'exemple non limitatif et en regard de la figure 5, un mode de réalisation de la fourche (4) intégrant le moyen (5) de modification de sa géométrie retenant le principe de variation de la dimension du té supérieur de ladite fourche :
La fourche est constituée de deux bras (10) articulés en (C) et (C') avec les biellettes fixes (20) qui les relient au té de fourche inférieur (14), la distance séparant les points d'articulation (B) et (B') desdits bras avec les biellettes mobiles (19) étant déterminée par la position des biellettes (19) qui font partie du moyen de réglage de l'écartement des bras.

Chaque tête des biellettes (19) et (20) est articulée avec la vis-axe (21) à l'intérieur d'une rainure des bras (10), la longueur de la rainure permettant le débattement angulaire de la biellette, sa largeur étant ajustée à celle de ladite tête de biellette.

Les biellettes (20) assurent le transfert de la charge des bras (10) vers le té de fourche inférieur (14) et par voie de conséquence, vers le tube de fourche (7) dont il est solidaire.

Le moyen de réglage de l'écartement des bras est constitué par les biellettes (19) qui déterminent un triangle isocèle dont la dimension de la base (B-B') est réglable en fonction de la hauteur de son sommet matérialisé par l'articulation des têtes de biellettes (19) à l'intérieur de l'écrou coulissant (11), lequel est déplacé dans la glissière (15) en fonction du sens de rotation de la vis (12) actionnée par l'usager grâce à la molette (13). La course de l'écrou coulissant est limitée par la longueur des rainures de la glissière (15) dans lesquelles passent les biellettes (19). Le moyen de réglage ci-dessus évoqué est remarquable en ce que l'effort de serrage des bras (10) sur l'axe de la roue à laquelle la fourche est raccordée, est transmis aux biellettes (19) puis largement démultiplié pour l'usager qui n'en ressent que la composante antagoniste appliquée au système triangulé par le couple vis-écrou (12) et (11) manoeuvré à la molette (13).

La rigidité de la fourche est obtenue lors de l'assemblage final de celle-ci sur la colonne de direction de la bicyclette d'accueil par mise en place du té de fourche supérieur (16) dont les rainures (17) guident l'extrémité haute des bras (10) munies de goupilles de positionnement ainsi que par assemblage avec les vis (23) qui immobilisent le té de fourche supérieur (16) sur la glissière (15) elle-même solidaire du té de fourche inférieur (14).

Quels qu'en soient les modes de réalisation, l'invention permet avec des moyens simples et économiques, soit de proposer des bicyclettes disposant d'emblée de l'option d'usine permettant leur raccordement à toute autre bicyclette de façon à former un tandem à trois roues, soit de transformer une bicyclette existante à l'aide d'un kit offrant les mêmes possibilités.

### Glossaire des désignations correspondant aux repères mentionnés dans les figures:

(1) Première bicyclette du tandem.
(2) Seconde bicyclette du tandem.
(3) Moyen de raccordement articulé de la bicyclette (1) sur la bicyclette (2).
(4) Fourche avant de la bicyclette (1).
(5) Moyen de modification de la géométrie de la fourche avant (4) de la bicyclette (1).
(6) Frein de jante optionnel de la fourche avant de la bicyclette (1).
(7) Tube de fourche de la bicyclette (1).
(8) Épaulement du moyen de raccordement (3).
(9) Pivot d'articulation sphérique du moyen de raccordement (3).
(10) Bras de la fourche de la bicyclette (1).
(11) Écrou coulissant du moyen de réglage de l'écartement des bras.
(12) Vis du moyen de réglage de l'écartement des bras.
(13) Molette d'actionnement du moyen de réglage de l'écartement des bras.
(14) Té de fourche inférieur de la fourche (4).
(15) Glissière du moyen de réglage de l'écartement des bras.
(16) Té de fourche supérieur de la fourche (4).
(17) Rainure et goupille de guidage des bras de la fourche dans le té de fourche supérieur (16).
(18) Centreur du moyen de raccordement (3).
(19) Jeu de biellettes mobiles du moyen de réglage de l'écartement des bras.
(20) Jeu de biellettes fixes supportant les bras de la fourche.
(21) Vis-axe d'articulation des têtes de biellettes.
(22) Embout des bras de la fourche.
(23) Vis d'assemblage du té de fourche supérieur.
(24) Patte du cadre de la roue arrière de la bicyclette (2).
(25) Moyeu de la roue.
(26) Axe de la roue.

## Revendications

1. Fourche de support de la roue avant d'une bicyclette, **caractérisée en ce que** les parties supérieures de ses bras rigides (10) comportent chacune une paire d'articulations avec deux tés (14,16) formant un châssis solidaire du tube (7) de fourche et dont l'un au moins comporte un dispositif de réglage symétrique pour permettre un écartement variable entre les extrémités des bras (10) afin que cette fourche (4) puisse, avec un premier écartement, supporter la roue avant et, avec un second écartement, supérieur au premier, coopérer avec les extrémités de l'axe d'une roue arrière d'une autre bicyclette.

2. Fourche selon la revendication 1, **caractérisée en ce que** la différence entre les deux écartements des extrémités des bras (10) est de l'ordre de 4 cm.

3. Fourche selon la revendication 1 ou 2, **caractérisée en ce que** chaque bras (10) est pivotant autour de l'un de ses points (C,C'), les moyens de réglage de l'écartement entre les extrémités des bras comportant des moyens pour régler l'écartement angulaire entre les deux bras pivotants (10).

4. Fourche selon la revendication 3, **caractérisée en ce qu'**elle comprend une barre transversale (20) parallèle à l'axe de la roue et à laquelle sont fixés les pivots (C, C') des bras.

5. Fourche selon la revendication 3 ou 4, **caractérisée en ce qu'**elle comporte deux biellettes (19), la première étant articulée au premier bras et la seconde au second bras, ces articulations étant distinctes des pivots des bras, les extrémités de ces biellettes qui sont opposées aux bras étant solidaires d'un organe (11) déplaçable pour permettre la variation de l'angle entre les biellettes (19) et donc le pivotement des bras autour des pivots.

6. Fourche selon les revendications 4 et 5, **caractérisée en ce que** l'organe (11) déplaçable pour permettre la variation de l'angle entre les biellettes, comporte un châssis (15) fixé à la barre (20) de laquelle sont solidaires les pivots (C, C') des bras (10).

7. Fourche selon la revendication 5 ou 6, **caractérisée en ce que** l'organe (11) déplaçable pour faire varier l'angle entre les biellettes (19) est commandable par un dispositif à vis (12) dont la tête (13) est de préférence disposée à la partie supérieure de la fourche.

8. Fourche selon l'une quelconque des revendications précédentes, **caractérisée en ce que** l'extrémité de chaque bras comporte un trou dont la périphérie est fermée et destiné à recevoir un accessoire d'adaptation aux extrémités de l'axe de la roue avant ou aux extrémités de l'axe de la roue arrière d'une autre bicyclette.

9. Fourche selon l'une quelconque des revendications précédentes, **caractérisée en ce que** la face intérieure de chaque extrémité de bras présente une surface courbe, par exemple sphérique, de façon à permettre un contact avec une pièce correspondante pour les divers écartements angulaires entre les bras.

10. Fourche selon l'une quelconque des revendications précédentes, **caractérisée en ce qu'**un frein (6) est solidaire de cette fourche, ce frein étant tel qu'il puisse coopérer tant avec la roue avant de la bicyclette qu'avec la roue arrière d'une autre bicyclette quand la roue avant est démontée.

11. Accessoire d'adaptation de la fourche selon l'une quelconque des revendications précédentes à l'axe de la roue avant ou à l'axe de la roue arrière d'une autre bicyclette, comprenant deux douilles (9) emboîtables sur les extrémités respectives de la roue avant de la bicyclette ou de la roue arrière d'une autre bicyclette, chaque douille présentant une surface sphérique pouvant pivoter avec un débattement angulaire à l'intérieur d'un trou formant palier à l'extrémité du bras correspondant de la fourche.

12. Bicyclette comprenant une fourche selon l'une quelconque des revendications 1 à 10.

13. Appareil de locomotion du type tandem à trois roues, comprenant une bicyclette avant (2) et une bicyclette arrière (1), dont la bicyclette arrière (1) comporte une fourche (4) selon l'une quelconque des revendications 1 à 10, la roue avant de cette bicyclette arrière étant démontée et la fourche de sa roue avant étant fixée et articulée aux extrémités de l'axe de la roue arrière de la bicyclette avant (2).

## Patentansprüche

1. Gabel als Träger des Rades eines Fahrrades, **dadurch gekennzeichnet, dass** die höheren Teile ihre starren Arme (10), jedes ein Paar Gelenke mit zwei T-Teilen (14,16) umfaßt, die untrennbar mit der Gabelröhre (7) verbunden einen Rahmen bilden, und von den wenigstens eines der T-Teilen eine symmetrische Einstellvorrichtung umfaßt, um ein veränderliches Auseinandergehen zwischen den Enden der Arme (10) zu erlauben, damit diese Gabel (4), mit einem Ersten Auseinandergehen das Vorderrad tragen kann, und mit einem Zweiten Auseinandergehen, größer als das Erste, mit den Enden der Achse des Hinterrads eines anderen Fahrrades Hinzuwählen kann.

2. Gabel nach Anspruch 1, **dadurch gekennzeichnet, dass** der Unterschied zwischen den zwei Auseinandergehen der Enden der Arme (10), in einer Größenordnung von 4 cm liegt.

3. Gabel nach Anspruch 1 oder 2, **dadurch gekennzeichnet, dass** jeder Arm (10), um einen von seinen Punkten (C, C') drehbar ist, die Mittel der Einstellung des Auseinandergehens zwischen den Enden der Arme, Mittel umfassen, um das eckige Auseinandergehen zwischen den zwei Dreharmen (10) einzustellen.

4. Gabel nach Anspruch 3, **dadurch gekennzeichnet, dass** sie eine quere Stange (20) umfaßt, die zur Achse des Rades parallel ist, und an der die Angelpunkte (C, C') der Arme befestigt sind.

5. Gabel nach Anspruch 3 oder 4, **dadurch gekennzeichnet, dass** sie zwei Nebenpleuelstangen (19) umfaßt, die Erste am Ersten Arm und die Zweite am Zweiten Arm artikuliert ist, diese Gelenke der Angelpunkte der Arme unterschieden sind, die Enden dieser Nebenpleuelstangen die den Armen entgegengesetzt sind untrennbar mit einem verstellbaren Organ (11) verbunden sind, um die Veränderung des Winkels zwischen den Nebenpleuelstangen (19) und dem Schwenken der Arme um die Angelpunkte also zu erlauben.

6. Gabel nach Ansprüche 4 und 5, **dadurch gekennzeichnet, dass** das verstellbare Organ (11), um die Veränderung des Winkels zwischen den Nebenpleuelstangen zu erlauben, einen Rahmen (15) umfaßt der an der Stange (20) befestigt ist, die untrennbar mit den Angelpunkten (C, C') der Arme (10) verbunden ist.

7. Gabel nach Anspruch 5 oder 6, **dadurch gekennzeichnet, dass** das verstellbare Organ (11), um den Winkel zwischen den Nebenpleuelstangen (19) variieren zu lassen, durch eine Schraubenvorrichtung (12) zu betätigen ist, deren Kopf (13), sich vorzugsweise am höheren Teil der Gabel befindet.

8. Gabel nach irgendeinem einem der vorigen Ansprüche **dadurch gekennzeichnet, dass** das Ende jedes Armes ein Loch umfaßt, dessen Peripherie geschlossen ist und bestimmt ist, ein Zubehör der Anpassung an die Enden der Achse des Vorderrads oder an die Enden der Achse des Hinterrads eines anderen Fahrrades zu erhalten.

9. Gabel nach irgendeinem einem der vorigen Ansprüche **dadurch gekennzeichnet, dass** die innere Seite jedes Ende der Arme eine gebogene Oberfläche stellt, zum Beispiel sphärisch, um **dadurch** den Kontakt mit einem Teil, das ihr entspricht, für die Verschiedene eckige Auseinandergehen zwischen den Armen, zu erlauben.

10. Gabel nach irgendeinem einem der vorigen Ansprüche **dadurch gekennzeichnet, dass** eine Bremse (6) untrennbar mit dieser Gabel verbunden ist, diese Bremse so seiend, dass sie sowohl mit dem Vorderrad des Fahrrades als auch mit dem Hinterrad eines anderen Fahrrades mitarbeiten kann, wenn das Vorderrad weggenommen ist.

11. Nach irgendeinem einem der vorigen Ansprüche, Zubehör der Anpassung der Gabel an der Achse des Vorderrads oder an der Achse des Hinterrads eines anderen Fahrrades, das zwei Hülsen (9) umfaßt, die sich auf den jeweiligen Enden des Rades das Fahrrad oder des Hinterrads eines anderen Fahrrades stecken, jede Hülse, die eine sphärische Oberfläche vorstellt, die sich mit einem Ausschlag innerhalb eines Loches drehen kann, das ein Lager am Ende des entsprechenden Armes der Gabel bildet.

12. Fahrrad, das eine Gabel nach irgendeinem einem Anspruchs 1 bis 10 umfaßt.

13. Gerät der Fortbewegung des Typs dreirädriges Tandem, das ein Vorderfahrrad (2) und ein Hinterfahrrad (1) umfaßt, dessen Hinterfahrrad (1) eine Gabel (4) nach irgendeinem einem Anspruchs 1 bis 10 umfaßt, das Vorderrad dieses Hinterfahrrades weggenommen ist, und die Gabel seines Vorderrads, an den Enden der Achse des Hinterrads des Vorderfahrrads (2) befestigt und artikuliert ist.

## Claims

1. Fork of support of the front wheel of a bicycle, **characterized in that** the higher parts of its rigid arms (10) comprise each one a pair of articulations with two t-pieces (14,16) forming a frame interdependent of the tube (7) of fork and of which one t-piece at least comprises a symmetrical adjusting device to allow a variable spreading between the ends of the arms (10) so that this fork (4) can, with a first spreading, support the front wheel and, with a second spreading, higher than the first, cooperate with the ends of the axis of a rear wheel of another bicycle.

2. Fork according to claim 1, **characterized in that** the difference between the two spreadings of the ends of the arms (10) is about 4 cm.

3. Fork according to the claim 1 or 2, **characterized in that** each arm (10) is swivelling around one of its points (C, C'), means of adjustment of the spreading between the ends of the arms comprising means to adjust the angular spreading between the two swivelling arms (10).

4. Fork according to claim 3, **characterized in that** it includes a transverse bar (20) parallel with the wheel axle and at which the pivots (C, C') of the arms are fixed.

5. Fork according to the claim 3 or 4, **characterized in that** it comprises two small rods (19), the first being articulated with the first arm and the second with the second arm, these articulations being distinct from the pivots of the arms, ends of these small rods which are opposed to the arms being interdependent of a movable part (11) to allow the variation of the angle between the small rods (19) and thus the swivelling of the arms around the pivots.

6. Fork according to the claims 4 and 5, **characterized in that** the movable part (11) to allow the variation of the angle between the small rods, comprises a frame (15) fixed at the bar (20) whose are interdependent the pivots (C, C') of the arms (10).

7. Fork according to the claim 5 or 6, **characterized in that** the movable part (11) to vary the angle between the small rods (19) come into operation by a device with a screw (12) whose head (13) is preferably positioned with the higher part of the fork.

8. Fork according to any of the preceding claims, **characterized in that** the end of each arm comprises a hole whose periphery is closed and intended to receive an accessory to fit on the ends of the axis of the front wheel or to fit on the ends of the axis of the rear wheel of another bicycle.

9. Fork according to any of the preceding claims, **characterized in that** the interior face of each end of arm presents a curved surface, for example spherical, in order to allow a contact with a corresponding part for the various angular spreadings between the arms.

10. Fork according to any of the preceding claims, **characterized in that** a brake (6) is interdependent of this fork, this brake being such as it can cooperate as well with the front wheel of the bicycle as with the rear wheel of another bicycle when the front wheel is removed.

11. Accessory of adaptation of the fork according to any of the preceding claims to the axis of the front wheel or the axis of the rear wheel of another bicycle, including two casings (9) encasable on the respective ends of the front wheel of the bicycle or the rear wheel of another bicycle, each casing having a spherical surface being able to swivel with an angular displacement inside a hole forming stage at the end of the corresponding arm of the fork.

12. Bicycle including a fork according to any of claims 1 to 10.

13. Apparatus of locomotion of the three-wheeled tandem type, including a front bicycle (2) and a rear bicycle (1), whose rear bicycle (1) comprises a fork (4) according to any of claims 1 to 10, the front wheel of this rear bicycle being removed and the fork of its front wheel being fixed and being articulated at the ends of the axis of the rear wheel of the front bicycle (2).
